(19) Europäisches Patentamt
European Patent Office
Office européen des brevets

(11) **EP 1 782 969 B1**

(12) **EUROPÄISCHE PATENTSCHRIFT**

(45) Veröffentlichungstag und Bekanntmachung des Hinweises auf die Patenterteilung:
**29.02.2012  Patentblatt 2012/09**

(51) Int Cl.:
*B60C 9/20* *(2006.01)*    *B60C 9/18* *(2006.01)*

(21) Anmeldenummer: 06121480.5

(22) Anmeldetag: **29.09.2006**

(54) **Fahrzeugreifen**

Vehicle tire

Pneumatique pour véhicules

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.11.2005  DE 102005052647**

(43) Veröffentlichungstag der Anmeldung:
**09.05.2007  Patentblatt 2007/19**

(73) Patentinhaber: **Continental Reifen Deutschland GmbH**
**30165 Hannover (DE)**

(72) Erfinder: **Kuhn, Martin**
**30171, Hannover (DE)**

(74) Vertreter: **Finger, Karsten et al**
**Continental Aktiengesellschaft**
**Patente und Lizenzen**
**Postfach 1 69**
**30001 Hannover (DE)**

(56) Entgegenhaltungen:
**EP-A1- 1 167 081    EP-A1- 1 580 038**
**EP-A2- 1 584 494    WO-A1-01/72536**
**US-A- 3 090 417**

EP 1 782 969 B1

## Beschreibung

Die Erfindung betrifft einen Fahrzeugluftreifen mit zwei Reifenschultern, mit einem in Umfangsrichtung des Fahrzeugluftreifens über den Umfang des Fahrzeugluftreifens und in axialer Richtung zwischen den beiden Reifenschultern erstrecktem Laufstreifen, mit zwei jeweils von einer der beiden Reifenschultern nach radial innen erstreckten Reifenseitenwänden, mit einer in Umfangsrichtung über den Umfang des Fahrzeugluftreifens und in axialer Richtung von der einen Reifenseitenwand zur anderen Reifenseitenwand erstreckten Karkasse - insbesondere radialer Bauart - und mit einem radial oberhalb der Karkasse ausgebildetem Gürtel mit wenigstens zwei radial übereinander angeordneten über den gesamten Umfang des Fahrzeugluftreifens in Umfangsrichtung und von Reifenschulter zu Reifenschulter über die gesamte Aufstandsbreite erstreckt ausgebildeten Gürtellagen aus jeweils parallel zu einander ausgerichteten in Gummi- oder gummiähnlichem Kunststoffmaterial eingebetteten Festigkeitsträgern.

Derartige Fahrzeugluftreifen mit Gürtel mit mehreren übereinander ausgebildeten Gürtellagen sind - beispielsweise aus der DE4422548A1- bekannt. Derartige Fahrzeugluftreifen weisen üblicherweise keine Runflat-Eigenschaften auf. Zur Erzielung guter Komforteigenschaften sind die Seitenwände flexibel ausgebildet. Hoher Innendruck im auf eine Felge montierten Fahrzeugreifen in dessen Betriebszustand gewährleistet die für gute Handlingeigenschaften erforderliche Quersteifigkeit des Fahrzeugluftreifens.

Durch Reduzierung des Innendrucks bei derartigen Reifen kann zwar der Komfort des Fahrzeugreifens verbessert werden. Dies geht jedoch zu Lasten der Handlingeigenschaften.

Darüber hinaus können Reduzierung des Luftdrucks die Seitenwände des Reifens beschädigt werden und der Reifen aus seiner Sitzposition auf der Felge rutschen. Es sind vereinzelt Vorschläge gemacht worden, zur Reduzierung von Scherspannungen im Gürtel zwischen einzelne Gürtellagen eine sehr dünne Beschichtung aus kurzfaserverstärktem Gummimaterial vorzusehen. Um diesen Effekt zu erreichen darf diese Schicht nur sehr dünn mit einer Dicke von 0,3 bis höchstens 1 mm ausgebildet sein. Der Konflikt aus Handlingeigenschaften und Komforteigenschaften bleibt hierdurch unverändert ebenso wie die fehlenden Runflat-Eigenschaften erhalten.

Aus der WO 01/72536 A1 ist ein Reifen bekannt, bei welchem zwischen Gürtel und Karkasse ein Band aus drei übereinander ausgebildeten Bereichen unterschiedlicher Elastizität ausgebildet ist.

Der Erfindung liegt die Aufgabe zugrunde, in einfacher Weise die Schaffung eines Fahrzeugluftreifens mit zwei Reifenschulten, mit einem in Umfangsrichtung des Fahrzeugluftreifens über den Umfang des Fahrzeugluftreifens und in axialer Richtung zwischen den beiden Reifenschultern erstrecktem Laufstreifen, mit zwei jeweils von einer der beiden Reifenschultern nach radial innen erstreckten Reifenseitenwänden, mit einer in Umfangsrichtung über den Umfang des Fahrzeugluftreifens und in axialer Richtung von der einen Reifenseitenwand zur anderen Reifenseitenwand erstreckten Karkasse - insbesondere radialer Bauart - und mit einem radial oberhalb der Karkasse ausgebildetem Gürtel mit wenigstens zwei radial übereinander angeordneten über den gesamten Umfang des Fahrzeugluftreifens in Umfangsrichtung und von Reifenschulter zu Reifenschulter über die gesamte Aufstandsbreite erstreckt ausgebildeten Gürtellagen aus jeweils parallel zu einander ausgerichteten in Gummi- oder gummiähnlichem Kunststoffmaterial eingebetteten Festigkeitsträgern, zu ermöglichen, bei dem gute Handlingeigenschaften mit verbesserten Komforteigenschaften ermöglichten werden.

Erfindungsgemäß wird die Aufgabe durch die Ausbildung eines Fahrzeugluftreifens mit zwei Reifenschultern, mit einem in Umfangsrichtung des Fahrzeugluftreifens über den Umfang des Fahrzeugluftreifens und in axialer Richtung zwischen den beiden Reifenschultern erstrecktem Laufstreifen, mit zwei jeweils von einer der beiden Reifenschultern nach radial innen erstreckten Reifenseitenwänden, mit einer in Umfangsrichtung über den Umfang des Fahrzeugluftreifens und in axialer Richtung von der einen Reifenseitenwand zur anderen Reifenseitenwand erstreckten Karkasse - insbesondere radialer Bauart - und mit einem radial oberhalb der Karkasse ausgebildetem Gürtel mit wenigstens zwei radial übereinander angeordneten über den gesamten Umfang des Fahrzeugluftreifens in Umfangsrichtung und von Reifenschulter zu Reifenschulter über die gesamte Aufstandsbreite erstreckt ausgebildeten Gürtellagen aus jeweils parallel zu einander ausgerichteten in Gummi- oder gummiähnlichem Kunststoffmaterial eingebetteten Festigkeitsträgern, gemäß den Merkmalen von Anspruch 1 gelöst, bei dem zwischen zwei in radialer Richtung des Fahrzeugluftreifens benachbarten Gürtellagen eine über den Umfang des Fahrzeugluftreifens erstreckt ausgebildete in der Äquatorebene 2 bis 8 mm, insbesondere 3 bis 4 mm dick ausgebildete Platte aus Gummi- oder Gummiähnlichem Kunststoff mit darin eingebetteten verstärkenden Fasern ausgebildet ist

Die mit 2 bis 8 mm Dicke sehr dick ausgebildete faserverstärkte Gummiplatte zwischen den benachbarten Gürtellagen bewirkt eine Spreizung der des Gürtels und hierdurch die Erhöhung des Flächenträgheitsmoments des gesamten Laufflächenbereiches gegen radiale und laterale Verformung. Die Faserverstärkung erhöht die Stabilität des Querschnitts, d.h. der Querschnitt bleibt eben. Bei einem derartigen Fahrzeugluftreifen kann die radiale Steifigkeit beispielsweise durch Reduzierung des Reifeninnendruck im Betriebszustand gegenüber einem herkömmlichen Fahrzeugluftreifen oder konstruktiv bei Beibehaltung guter Handlingeigenschaften leicht reduziert werden Hierdurch wird der Komfort bei Beibehaltung guter Handlingeigenschaften verbessert.

Darüber hinaus sind durch eine derartige Ausbildung auch Runflat-Eigenschaften des Fahrzeugluftreifens erzielbar. Bei plötzlichem Luftdruckverlust werden die radialen Lasten über Zugkräfte in der Karkasse in die Felge eingeleitet. Diese Tragwirkung ist wegen der Erhöhung des Biegeflächenträgheitsmomentes des gesamten Laufflächenbereichs möglich.

Besonders vorteilhaft ist die Ausbildung eines Fahrzeugluftreifens gemäß den Merkmalen von Anspruch 2, bei dem die zwischen den beiden in radialer Richtung des Fahrzeugluftreifens benachbarten Gürtellagen ausgebildete Gummiplatte in axialer Richtung über die gesamte Aufstandsbreite erstreckt ausgebildet und insbesondere über die gesamte Aufstandsbreite mit einer Dicke von 2 bis 8 mm, insbesondere 3 bis 4 mm ausgebildet ist. Dies ermöglicht eine weitere der Erhöhung der Schubsteifigkeit des Querschnitts sowie der Biegesteifigkeit in axialer Richtung. Dies erhöht die Fähigkeit Querkräfte zu übertragen im Betriebszustand des montierten Fahrzeugreifens auf der Felge.

Besonders vorteilhaft ist die Ausbildung eines Fahrzeugluftreifens gemäß den Merkmalen von Anspruch 3, bei dem die zwischen den beiden in radialer Richtung des Fahrzeugluftreifens benachbarten Gürtellagen ausgebildete Gummiplatte in axialer Richtung über die gesamte axiale Breite zumindest einer der beiden Gürtellagen erstreckt ausgebildet und insbesondere über die gesamte Breite dieser Gürtellage mit einer Dicke von 2 bis 8 mm, insbesondere 3 bis 4 mm ausgebildet ist. Dies ermöglicht eine zusätzliche Reduzierung der Modulspannung und der Scherspannung zwischen Gummiplatte und den Gürtellagen. Hierdurch können Dauerhaltbarkeitseigenschaften weiter verbessert werden.

Besonders vorteilhaft ist die Ausbildung eines Fahrzeugluftreifens gemäß den Merkmalen von Anspruch 4, bei dem die zwischen den beiden in radialer Richtung des Fahrzeugluftreifens benachbarten Gürtellagen ausgebildete Gummiplatte in axialer Richtung zumindest bis in eine - insbesondere bis in beide - der beiden Seitenwände hinein erstreckt ausgebildet ist.

Besonders vorteilhaft ist die Ausbildung eines Fahrzeugluftreifens gemäß den Merkmalen von Anspruch 5, wobei die verstärkenden Fasern Kurzfasern mit einer in Haupterstreckungsrichtung gemessenen Länge von 0,05 bis 2 mm und insbesondere von 0,1 bis 1mm ausgebildet sind.

Besonders vorteilhaft ist die Ausbildung eines Fahrzeugluftreifens gemäß den Merkmalen von Anspruch 6, bei dem die verstärkenden Fasern Kurzfasern mit einer senkrecht zur Haupterstreckungsrichtung gemessenen maximalen Dicke D und mit einer in Haupterstreckungsrichtung gemessenen Länge L sind, wobei für das Verhältnis (L/D) gilt:

$$1 \leq (L/D) \leq 1000 \quad \text{und insbesondere } 100 \leq (L/D) \leq 500.$$

Besonders vorteilhaft ist die Ausbildung eines Fahrzeugluftreifens gemäß den Merkmalen von Anspruch 7, wobei die verstärkenden Fasern Kurzfasern aus Glasfaser, Textilfaser oder aus Steinwolle sind. Dies begünstigt eine hohe Schubsteifigkeit und Biegesteifigkeit in axialer Richtung.

Besonders vorteilhaft ist die Ausbildung eines Fahrzeugluftreifens gemäß den Merkmalen von Anspruch 8, wobei die verstärkenden Fasern im Fahrzeugluftreifen mit ihrer Haupterstreckungsrichtung im Wesentlichen in axialer Richtung des Fahrzeugluftreifens ausgerichtet sind. Dies begünstigt eine hohe Schubsteifigkeit und Biegesteifigkeit in axialer Richtung.

Besonders vorteilhaft ist die Ausbildung eines Fahrzeugluftreifens gemäß den Merkmalen von Anspruch 9, wobei in der Reifenseitenwand eine benachbart zu wenigstens einer Karkassenlage ein - insbesondere im Querschnitt in einer Querschnittsebene die die Reifenachse beinhaltet sichelförmig ausgebildetes - Verstärkungsmaterial ausgebildet ist, das sich bis in den Schulterbereich erstreckt. Durch Kombination dieser beiden Lastabtragenden Mechanismen werden in besonders einfacher Weise optimale RunFlat-Eigenschaften ermöglicht.

Die Erfindung wird im Folgenden an Hand der in den Figuren 1 bis 2 dargestellten Ausführungsbeispiele näher erläutert. Darin zeigen

Fig. 1    schematische Querschnittsdarstellung eines erfindungsgemäßen Fahrzeugluftreifens in einer Querschnittsebene, die die Drehachse des Fahrzeugluftreifens beinhaltet,

Fig. 2    schematische Querschnittsdarstellung einer weiteren Ausführungsform eines erfindungsgemäßen Fahrzeugluftreifens in einer Querschnittsebene, die die Drehachse des Fahrzeugluftreifens beinhaltet

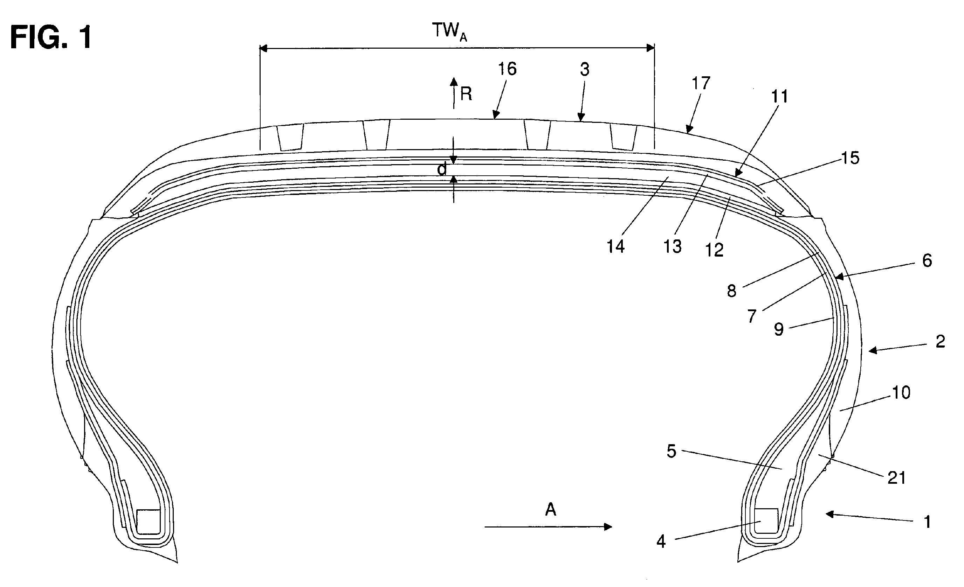

Figur 1 zeigt einen Fahrzeugluftreifen radialer Bauart für Personenkraftwagen mit zwei Reifenseitenwänden 2 einem Laufstreifen 3 und jeweils einem am radial inneren Ende der Reifenseitenwände 2 ausgebildeten Reifenwulst 1. Der Fahrzeugluftreifen ist in bekannter Weise mit einer Karkasse 6 radialer Bauart mit zwei Karkassenlagen 7 und 8, die sich in Umfangsrichtung des Fahrzeugluftreifens über den gesamten Umfang des Fahrzeugluftreifens und in axialer Richtung A des Fahrzeugluftreifens, jeweils ausgehend von dem auf der linken Seite dargestellten Wulstbereich 1, über die linke Seitenwand 2, der links dargestellten Reifenschulter 17, den Kronenbereich 16, die rechts dargestellte Reifenschulter 17, die rechte Seitenwand 2 bis zum rechten Wulstbereich 1, erstrecken. Die Karkassenlagen 7 und 8 sind jeweils aus in Kautschuk eingebetteten parallelen Festigkeitsträgern bekannter Art ausgebildet, wobei die Festigkeitsträger im Wesentlichen in radialer Richtung des Fahrzeugluftreifens erstreckt ausgerichtet sind. Die Karkassenlagen 7 und 8 sind aufeinander liegend ausgebildet. Im linken und rechten Wulstbereich 1 sind die Karkassenlagen jeweils in bekannter Weise um einen zugfesten Wulstkern 4 von axial innen nach axial außen umgeschlagen.

Auf der Innenseite der Karkasse ist in bekannter Weise eine in axialer Richtung A von Wulstbereich zu Wulstbereich und in Umfangsrichtung über den gesamten Umfang des Fahrzeugluftreifens erstreckt ausgebildete Innenschicht 9 aus luftundurchlässigem Kautschukmaterial bekannter Art ausgebildet. Im Bereich der Reifenseitenwände 2 ist auf der Karkasse in bekannter Weise ein Seitenwandgummistreifen 10 aufgelegt, der sich über den gesamten Umfang des Fahrzeugluftreifens und in radialer Richtung R zwischen dem jeweiligen Wulstbereich 1 und der jeweiligen Reifenschulter 17 erstreckt.

Im Wulstbereich 1 ist in bekannter Weise jeweils ein Hornprofil 21 ausgebildet.

Im radial äußeren Bereich des Fahrzeugluftreifens ist radial oberhalb der Karkasse auf der Karkasse ein Gürtel 11 mit Gürtellagen 12 und 13 bekannter Art ausgebildet. Die Gürtellagen 12 und 13 sind aus jeweils in Kautschuk eingebetteten parallelen Festigkeitsträgern bekannter Art ausgebildet, wobei die Festigkeitsträger der Gürtellage 12 in der Äquatorialebene des Fahrzeugluftreifens einen Schnittwinkel zur Umfangsrichtung von 15 bis 65 ° zur Umfangsrichtung einnimmt, ebenso nehmen die Festigkeitsträger der Gürtellage 13 in der Äquatorialebene des Fahrzeugluftreifens einen Schnittwinkel zur Umfangsrichtung von 15 bis 65 ° zur Umfangsrichtung ein. Die Festigkeitsträger der Gürtellage 12 und die Festigkeitsträger der Gürtellage 13 haben dabei in bekannter Kreuzlagenanordnung zueinander einen gegenläufigen Steigungsverlauf.

Radial oberhalb der Gürtellage 13 ist der profilierte Laufstreifen 3 in bekannter Art ausgebildet, der sich über den gesamten Umfangsbereich des Fahrzeugluftreifens und in axialer Richtung A von Reifenschulter zu Reifenschulter hin erstreckt.

Die Gürtellagen 12 und 13 erstrecken sich in axialer Richtung A über die gesamte axiale Erstreckung (Aufstandsbreite) $TW_A$ der Aufstandsfläche des Fahrzeugluftreifens im montierten Zustand unter Betriebsbedingungen bis in die beiden Reifenschultern hinein.

Zwischen den Gürtellagen 12 und 13 ist eine faserverstärkte Gummiplatte 14 ausgebildet, die sich über die gesamte axiale Erstreckung (Aufstandsbreite) $TW_A$ hindurch zwischen den Gürtellagen 12 und 13 hindurch bis in den Schulterbereich 17 des Fahrzeugluftreifens hinein erstreckt. In diesem gesamten Erstreckungsbereich über die Aufstandsbreite $TW_A$ hinweg weist die faserverstärkte Gummiplatte 14 eine in radialer Richtung R des Fahrzeugluftreifens gemessene Dicke d auf, wobei für die Dicke d gilt: $2 \text{ mm} \leq d \leq 8 \text{ mm}$. In einer besonderen Ausführung gilt für die Dicke d: $3 \text{ mm} \leq d \leq 4 \text{ mm}$.

In einer Ausführung ist die Dicke d über die gesamte Aufstandsbreite $TW_A$ hinweg konstant - beispielsweise 5 mm dick - gewählt.

In einer Ausführung sind die Gürtellagen 12 und 13 axial außerhalb der faserverstärkten Gummiplatte 14 in unmittelbarem Berührkontakt zueinander ausgebildet.

Die faserverstärkte Gummiplatte 14 ist aus einer Gummimischung bekannter Art mit einem hohen E-Modul von 1 bis 20 N/mm$^2$ - vorzugsweise von 4 bis 6 N/mm$^2$ - und mit niedriger Hystereseigenschaft mit darin eingebetteten Kurzfasern ausgebildet. Die Hysterese wird in bekannter Weise über den $\tan\delta_{60}$ - Wert angegeben. Die Hysterese der Gummimischung der Gummiplatte weist einen $\tan\delta_{60}$ - Wert von 0,06 bis 0,15 auf. Der $\tan\delta_{60}$ - Wert wird in herkömmlicher Weise über den Eplexortest ermittelt. Die Kurzfasern sind beispielsweise Glasfasern, Textilfasern oder Fasern von Steinwolle bekannter Art.

In einer besonderen Ausführung sind die Kurzfasern mit ihrer Haupterstreckungsrichtung im Wesentlichen in axialer Richtung des Fahrzeugluftreifens ausgebildet.

Die Kurzfasern weisen in ihrer Haupterstreckungsrichtung Längen L von 0,05 bis 2 mm und insbesondere von 0,1 bis 1mm auf.

Die Kurzfasern sind mit einer senkrecht zur Haupterstreckungsrichtung gemessenen maximalen Dicke D und mit einer in Haupterstreckungsrichtung gemessenen Länge L ausgebildet, wobei für das Verhältnis (L/D) gilt: $1 \leq (L/D) < 1000$ und bevorzugt $100 \leq (L/D) < 500$. Beispielsweise ist das Verhältnis (L/D) =250 gewählt.

In einer besonderen Ausführung ist radial oberhalb der äußeren Gürtellage 13 eine zusätzliche Gürtelbandagenlage 15 bekannter Art mit im wesentlichen in Umfangsrichtung des Fahrzeugluftreifens ausgerichteten Festigkeitsträgern bekannter Art ausgebildet.

In einer Ausführungsform ist auf dem Wulstkern 4 jeweils ein Kemreiter 5 bekannter Art ausgebildet.

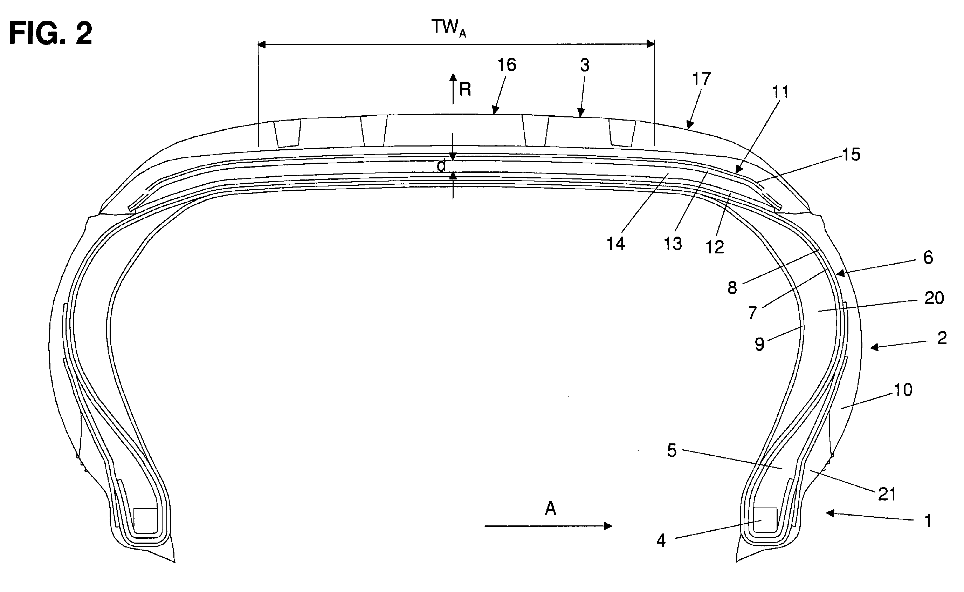

Figur 2 zeigt ein weiteres Ausführungsbeispiel, bei dem der Fahrzeugluftreifen wie der Fahrzeugluftreifen von Figur 1 ausgebildet ist, wobei zusätzlich zwischen Innenschicht 9 und Karkasse 6 ein in der dargestellten Schnittdarstellung sichelförmiges Insert 20 aus versteifendem Gummimaterial zur weiteren Verbesserung der Pannenlaufeigenschaften (Runflat-Eigenschaften) ausgebildet ist, wobei sich das sichelförmige Insert 20 jeweils vom Wulstbereich 1 bis zum Gürtel 11 erstreckt. Der Gürtel 11 mit Gürtellage 12, mit faserverstärkter Gummiplatte 14 und mit äußerer Gürtellage 13 reicht axial bis in den Ersteckungsbereich des sichelförmigen Inserts und deckt diesen radial außen ab.

In anderer nicht dargestellter Ausführungsform ist das sichelförmige Insert 20 zwischen den Karkasslagen 7 und 8 ausgebildet. In weiterer nicht dargestellter Ausführungsform ist das sichelförmige Insert 20 axial außerhalb der Karkasse 6 ausgebildet.

Die Festigkeitsträger der Karkasse 6 sind im Zusammenhang mit dem Karkassenaufbau verwendete Festigkeitsträger bekannter Art, beispielsweise Monofilamente oder Multifilamente aus Polyester oder Rayon. Bei besonderen Erfordernissen sind auch Festigkeitsträger aus Stahl oder Polyamid 6.6 denkbar.

Die Festigkeitsträger des Gürtels sind herkömmliche aus dem Bereich des Gürtelaufbaus bekannte Festigkeitsträger, wie z.B. Monofilamente oder Multifilamente, Garne oder Korde aus beispielsweise Stahl oder Aramid. Bei besonderen Erfordernissen sind auch Festigkeitsträger aus Glasfaser oder aus Kohlefaser denkbar.

Die Festigkeitsträger der Gürtelbandage sind zum Aufbau der Bandage übliche Festigkeitsträger, beispielsweise aus Polyamid 6.6. Bei besonderen Erfordernissen sind auch Festigkeitsträger aus Hybridmaterial z.B. aus Aramid-Polyamid 6.6-Hybrid oder aus Stahl-Polyamid 6.6-Hybrid oder aus Glasfaser- Polyamid 6.6-Hybrid denkbar.


Bezugszeichenliste

(Teil der Beschreibung)


1    Reifenwulst
2    Seitenwand
3    Laufstreifen
4    Wulstkern
5    Kemreiter
6    Karkasse
7    Karkassenlage
8    Karkassenlage
9    Innenschicht
10   Seitenwandgummi
11   Gürtel
12   Gürtellage
13   Gürtellage
14   Kurzfaserverstärkte Gummiplatte
15   Gürtelbandage
16   Kronenbereich
17   Reifenschulter
20   Insert
21   Hornprofil


**Patentansprüche**

1. Fahrzeugluftreifen für Personenkraftwagen mit zwei Reifenschultern, mit einem in Umfangsrichtung des Fahrzeugluftreifens über den Umfang des Fahrzeugluftreifens und in axialer Richtung zwischen den beiden Reifenschultem erstrecktem Laufstreifen (3), mit zwei jeweils von einer der beiden Reifenschultem nach radial innen erstreckten Reifenseitenwänden (2), mit einer in Umfangsrichtung über den Umfang des Fahrzeugluftreifens und in axialer Richtung von der einen Reifenseitenwand (2) zur anderen Reifenseitenwand (2) erstreckten Karkasse (6) - insbesondere radialer Bauart - und mit einem radial oberhalb der Karkasse (6) ausgebildetem Gürtel (11) mit wenigstens zwei radial übereinander angeordneten über den gesamten Umfang des Fahrzeugluftreifens in Umfangsrichtung und von Reifenschulter zu Reifenschulter über die gesamte Aufstandsbreite erstreckt ausgebildeten Gürtellagen (12,13) aus jeweils parallel zu einander ausgerichteten in Gummi- oder gummiähnlichem Kunststoffmaterial eingebetteten Festigkeitsträgern,
**dadurch gekennzeichnet,**
**dass** zwischen zwei in radialer Richtung des Fahrzeugluftreifens benachbarten Gürtellagen (12,13) eine über den Umfang des Fahrzeugluftreifens erstreckt ausgebildete in der Äquatorebene 2 bis 8 mm, insbesondere 3 bis 4 mm dick ausgebildete Platte (14) aus Gummi- oder Gummiähnlichem Kunststoff mit darin eingebetteten verstärkenden Kurzfasern mit einer in Haupterstreckungsrichtung gemessenen Länge L von 0,05 bis 2 mm ausgebildet ist.

**2.** Fahrzeugluftreifen gemäß den Merkmalen von Anspruch 1,
bei dem die zwischen den beiden in radialer Richtung des Fahrzeugluftreifens benachbarten Gürtellagen (12,13) ausgebildete Gummiplatte (14) in axialer Richtung über die gesamte Aufstandsbreite erstreckt ausgebildet und insbesondere über die gesamte Aufstandsbreite mit einer Dicke von 2 bis 8 mm, insbesondere 3 bis 4 mm ausgebildet ist.

**3.** Fahrzeugluftreifen gemäß den Merkmalen von Anspruch 1,
bei dem die zwischen den beiden in radialer Richtung des Fahrzeugluftreifens benachbarten Gürtellagen (12,13) ausgebildete Gummiplatte (14) in axialer Richtung über die gesamte axiale Breite zumindest einer der beiden Gürtellagen (12,13) erstreckt ausgebildet und insbesondere über die gesamte Breite dieser Gürtellage mit einer Dicke von 2 bis 8 mm, insbesondere 3 bis 4 mm ausgebildet ist.

**4.** Fahrzeugluftreifen gemäß den Merkmalen von Anspruch 1, 2 oder 3,
bei dem die zwischen den beiden in radialer Richtung des Fahrzeugluftreifens benachbarten Gürtellagen (12,13) ausgebildete Gummiplatte (14) in axialer Richtung zumindest bis in eine - insbesondere bis in beide - der beiden Seitenwände (2) hinein erstreckt ausgebildet ist.

**5.** Fahrzeugluftreifen gemäß den Merkmalen von einem oder mehreren der vorangegangenen Ansprüche,
wobei die verstärkenden Fasern Kurzfasem mit einer in Haupterstreckungsrichtung gemessenen Länge L von 0,1 bis 1 mm ausgebildet sind.

**6.** Fahrzeugluftreifen gemäß den Merkmalen von einem oder mehreren der vorangegangenen Ansprüche,
wobei die verstärkenden Fasern Kurzfasem mit einer senkrecht zur Haupterstreckungsrichtung gemessenen maximalen Dicke D und mit einer in Haupterstreckungsrichtung gemessenen Länge L sind, wobei für das Verhältnis (L/D) gilt: $1 \le (L/D) \le 1000$ und insbesondere $100 \le (L/D) \le 500$.

**7.** Fahrzeugluftreifen gemäß den Merkmalen von einem oder mehreren der vorangegangenen Ansprüche,
wobei die verstärkenden Fasern Kurzfasern aus Glasfaser, Textilfaser oder aus Steinwolle sind.

**8.** Fahrzeugluftreifen gemäß den Merkmalen von einem oder mehreren der vorangegangenen Ansprüche,
wobei die verstärkenden Fasern im Fahrzeugluftreifen mit ihrer Haupterstreckungsrichtung im Wesentlichen in axialer Richtung des Fahrzeugluftreifens ausgerichtet sind.

**9.** Fahrzeugluftreifen gemäß den Merkmalen von einem oder mehreren der vorangegangenen Ansprüche,
wobei in der Reifenseitenwand (2) eine benachbart zu wenigstens einer Karkassenlage (7) ein - insbesondere im Querschnitt in einer Querschnittsebene die die Reifenachse beinhaltet sichelförmig ausgebildetes - Verstärkungsmaterial (20) ausgebildet ist, das sich bis in den Schulterbereich erstreckt.

**Claims**

**1.** Pneumatic vehicle tyre for passenger cars with two tyre shoulders, with a tread rubber (3), which is made to extend in the circumferential direction of the pneumatic vehicle tyre over the circumference of the pneumatic vehicle tyre and in the axial direction between the two tyre shoulders, with two tyre sidewalls (3), which are made to extend radially inwards respectively from one of the two tyre shoulders, with a carcass (6) - in particular of a radial type - which is made to extend in the circumferential direction over the circumference of the pneumatic vehicle tyre and in the axial direction from one tyre sidewall (2) to the other tyre sidewall (2), and with a breaker belt (11), which is formed radially above the carcass (6) and has at least two belt plies (12, 13), which comprise reinforcing elements respectively aligned parallel to one another and embedded in rubber or rubber-like plastics material, are arranged radially one above the other and are formed so as to extend over the entire circumference of the pneumatic vehicle tyre in the circumferential direction and from tyre shoulder to tyre shoulder over the entire width of the contact area, **characterized in that** a sheet (14) of rubber or rubber-like plastic with short reinforcing fibres of a length L measured in the main direction of extent of 0.05 to 2 mm embedded therein, which is formed so as to extend over the circumference of the pneumatic vehicle tyre and is formed 2 to 8 mm thick, in particular 3 to 4 mm thick, in the equatorial plane, is formed between two belt plies (12, 13) that are adjacent in the radial direction of the pneumatic vehicle tyre.

**2.** Pneumatic vehicle tyre according to the features of Claim 1, in which the rubber sheet (14) formed between the two belt plies (12, 13) that are adjacent in the radial direction of the pneumatic vehicle tyre is formed so as to extend in the axial direction over the entire width of the contact area and is formed in particular with a thickness of 2 to 8 mm, in particular 3 to 4 mm, over the entire width of the contact area.

3. Pneumatic vehicle tyre according to the features of Claim 1, in which the rubber sheet (14) formed between the two belt plies (12, 13) that are adjacent in the radial direction of the pneumatic vehicle tyre is formed so as to extend in the axial direction over the entire axial width of at least one of the two belt plies (12, 13) and is formed in particular with a thickness of 2 to 8 mm, in particular 3 to 4 mm, over the entire width of this belt ply.

4. Pneumatic vehicle tyre according to the features of Claim 1, 2 or 3, in which the rubber sheet (14) formed between the two belt plies (12, 13) that are adjacent in the radial direction of the pneumatic vehicle tyre is formed so as to extend in the axial direction at least as far as into one - in particular as far as into both - of the two sidewalls (2).

5. Pneumatic vehicle tyre according to the features of one or more of the preceding claims, the reinforcing fibres being short fibres formed with a length L measured in the main direction of extent of 0.1 to 1 mm.

6. Pneumatic vehicle tyre according to the features of one or more of the preceding claims, the reinforcing fibres being short fibres of a thickness D, measured perpendicularly to the main direction of extent, and a length L, measured in the main direction of extent, where the hollowing applies for the ratio (L/D) : $1 \leq (L/D) \leq 1000$, and in particular $100 \leq (L/D) \leq 500$.

7. Pneumatic vehicle tyre according to the features of one or more of the preceding claims, the reinforcing fibres being short fibres of glass fibre, textile fibre or mineral wool.

8. Pneumatic vehicle tyre according to the features of one or more of the preceding claims, the reinforcing fibres in the pneumatic vehicle tyre being aligned with their main direction of extent substantially in the axial direction of the pneumatic vehicle tyre.

9. Pneumatic vehicle tyre according to the features of one or more of the preceding claims, a reinforcing material (20), which is adjacent to at least one carcass ply (7), is formed in a crescent shape, in particular in cross section in a cross-sectional plane that includes the tyre axis, and extends as far as into the shoulder region, being formed in the tyre sidewall (2).

**Revendications**

1. Bandage pneumatique pour roue de voiture automobile, présentant
deux épaulements,
une bande de roulement (3) qui s'étend dans la direction périphérique du bandage pneumatique pour roue de véhicule sur la périphérie du bandage pneumatique pour roue de véhicule et dans la direction axiale entre les deux épaulements du bandage de roue,
deux parois latérales (2) de bandage de roue qui s'étendent radialement vers l'intérieur depuis chacun des deux épaulements de bandage de roue,
une carcasse (6), en particulier de type radial, qui s'étend dans la direction périphérique à la périphérie du bandage pneumatique de roue de véhicule et dans la direction axiale depuis une paroi latérale (2) du bandage de roue jusqu'à l'autre paroi latérale (2) du bandage de roue et
une ceinture (11) formée radialement à l'extérieur de la carcasse (6) et présentant au moins deux couches de ceinture (12, 13), chacune constituée de renforts incorporés parallèlement les uns aux autres dans la matière synthétique de caoutchouc ou de type caoutchouc, disposées radialement l'une au-dessus de l'autre sur toute la périphérie du bandage pneumatique pour roue de véhicule dans la direction périphérique et s'étendant sur toute la largeur d'appui au sol d'un épaulement du bandage de roue à l'autre épaulement du bandage de roue,
**caractérisé en ce que**
une plaque (14) en matière synthétique de caoutchouc ou de type caoutchouc dans laquelle sont incorporées de courtes fibres de renfort dont la longueur L, mesurée dans la direction d'extension principale, est de 0,05 à 2 mm, est formée sur une épaisseur de 2 à 8 mm et en particulier de 3 à 4 mm dans le plan équatorial sur la périphérie du bandage pneumatique pour roue de véhicule entre deux couches de ceinture (12, 13) voisines dans la direction radiale du bandage pneumatique pour roue de véhicule.

2. Bandage pneumatique pour roue de véhicule selon les caractéristiques de la revendication 1, dans lequel la plaque de caoutchouc (14) formée entre les deux couches de ceinture (12, 13) voisines dans la direction radiale du bandage pneumatique pour roue de véhicule s'étend dans la direction axiale sur toute la largeur d'appui au sol et en particulier sur une épaisseur de 2 à 8 mm et en particulier de 3 à 4 mm sur toute la largeur d'appui au sol.

3. Bandage pneumatique pour roue de véhicule selon les caractéristiques de la revendication 1, dans lequel la plaque de caoutchouc (14) formée entre les deux couches de ceinture (12, 13) voisines dans la direction radiale du bandage pneumatique pour roue de véhicule s'étend dans la direction axiale sur toute la largeur axiale d'au moins l'une des deux couches de ceinture (12, 13) et en particulier sur toute la largeur de cette couche de ceinture sur une épaisseur de 2 à 8 mm et en particulier de 3 à 4 mm.

4. Bandage pneumatique pour roue de véhicule selon les caractéristiques des revendications 1, 2 ou 3, dans lequel la plaque de caoutchouc (14) formée entre les deux couches de ceinture (12, 13) voisines dans la direction radiale du bandage pneumatique pour roue de véhicule s'étend dans la direction axiale au moins jusque dans l'une des deux parois latérales (2) et en particulier dans ces deux parois latérales.

5. Bandage pneumatique pour roue de véhicule selon les caractéristiques d'une ou plusieurs des revendications précédentes, dans lequel les fibres de renfort sont de courtes fibres dont la longueur L mesurée dans la direction de leur extension principale est de 0,1 à 1 mm.

6. Bandage pneumatique pour roue de véhicule selon les caractéristiques d'une ou plusieurs des revendications précédentes, dans lequel les fibres de renfort sont de courtes fibres dont l'épaisseur maximale D mesurée perpendiculairement à la direction de leur extension principale est D et dont la longueur mesurée dans la direction de leur extension principale est L, avec pour le rapport (L/D) : $1 \leq (L/D) \leq 1\,000$ et en particulier $100 \leq (L/D) \leq 500$.

7. Bandage pneumatique pour roue de véhicule selon les caractéristiques d'une ou plusieurs des revendications précédentes, dans lequel les fibres de renfort sont de courtes fibres de verre, de courtes fibres textiles ou de la laine de roche.

8. Bandage pneumatique pour roue de véhicule selon les caractéristiques d'une ou plusieurs des revendications précédentes, dans lequel les fibres de renfort sont orientées dans l'emballage pneumatique pour roue de véhicule de telle sorte que la direction de leur extension principale soit essentiellement la direction axiale du bandage pneumatique pour roue de véhicule.

9. Bandage pneumatique pour roue de véhicule selon les caractéristiques d'une ou plusieurs des revendications précédentes, dans lequel un matériau de renfort (20) qui s'étend jusqu'au niveau de l'épaulement et configuré en coupe transversale en croissant de lune dans un plan de coupe transversale qui contient l'axe du bandage de roue est formé dans la paroi latérale (2) du bandage de roue au voisinage d'au moins une couche de carcasse (7).

**FIG. 1**

# FIG. 2

EP 1 782 969 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4422548 A1

- WO 0172536 A1